# EUROPÄISCHE PATENTSCHRIFT

(11) **EP 1 748 009 B1**
(45) Veröffentlichungstag und Bekanntmachung des Hinweises auf die Patenterteilung: **14.11.2012**
(21) Anmeldenummer: 06015194.1
(22) Anmeldetag: 21.07.2006
(51) Int. Cl.: B65G 69/00, B60D 1/24

(54) **Blockiervorrichtung für ein Nutzfahrzeug**
Blocking devise for a utility vehicle
Dispositif de blocage pour véhicule utilitaire

(30) Priorität: 29.07.2005 DE 102005038511
(43) Veröffentlichungstag der Anmeldung: 31.01.2007
(73) Patentinhaber: Alfred Arnold eingetragener Kaufmann Verladesysteme, 70439 Stuttgart (DE)
(72) Erfinder: Arnold, Alfred, 70469 Stuttgart (DE)
(74) Vertreter: Patentanwälte Ruff, Wilhelm, Beier, Dauster & Partner

(56) Entgegenhaltungen:
- EP-A- 0 388 848
- CA-A1- 1 067 032
- DE-A1- 19 630 897
- DE-U1- 20 220 749
- GB-A- 2 078 663
- NL-C1- 1 024 260
- US-A- 4 127 856
- US-A- 4 261 682
- US-A- 5 071 306

## Beschreibung

Die Erfindung betrifft eine Blockiervorrichtung für ein Nutzfahrzeug, insbesondere einen Nutzfahrzeugauflieger, zum Blockieren des Nutzfahrzeugs wenigstens während eines Be- oder Entladevorgangs wenigstens in und entgegen einer Wegfahrrichtung, mit einer Kupplung mit einem fahrbahn- oder gebäudeseitigen Kupplungsteil und einem fahrzeugseitigen Kupplungsteil.

Aus dem deutschen Gebrauchsmuster DE 202 20 749 U1 ist eine Blockier- und Positioniereinrichtung für Nutzfahrzeuge bekannt, bei der ein Nutzfahrzeug, insbesondere ein Nutzfahrzeuganhänger, mittels zweier Führungsschienen, auf denen am Nutzfahrzeug befestigte Gleitkufen laufen, in Bezug auf eine Laderampe positioniert wird. Nach Erreichen der Endposition greifen Verriegelungshaken an den Gleitschuhen des Nutzfahrzeugs an und halten dieses während des Ladevorgangs sicher in der Endposition.

Aus der US-Patentschrift US 4,127,856 ist eine Blockiervorrichtung für Nutzfahrzeuge bekannt, bei der eine am Heck des Nutzfahrzeugs horizontal angeordnete Stange in einer gebäudeseitigen Kupplung aufgenommen und blockiert wird. Die gebäudeseitige Kupplung ist verschwenkbar gelagert und weist zwei schräg aufeinander zulaufende Einführflächen auf. Beim Einführen der horizontalen Stange wird dadurch die Kupplung über die Wirkung der schräg angeordneten Elnführflächen verschwenkt, bis die Stange korrekt in die Kupplung eingeführt ist und dann blockiert werden kann.

Aus der deutschen Offenlegungsschrift DE 196 30 897 A1 ist eine konventionelle Maulkupplung für ein Nutzfahrzeug bekannt. Die Kupplung weist eine maulartige Öffnung zum Einführen einer Kupplungsöse auf, wobei in einem verengten Abschnitt der maulartigen Öffnung ein bewegbarer Bolzen angeordnet ist, der aus der maulartigen Öffnung heraus und in diese hinein verschoben werden kann und im eingekuppelten Zustand eine Durchgangsöffnung in der Kupplungsöse durchsetzt.

Aus der US-Patentschrift US 4,261,682 ist eine Blockiervorrichtung für ein Nutzfahrzeug bekannt, die mit einer Sattelaufliegerkupplung mit einem sogenannten Königszapfen arbeitet. Das an und für sich an einer Sattelzugmaschine angeordnete Kupplungsteil ist gebäudeseitig montiert, wohingegen das an und für sich an der Vorderseite eines Nutzfahrzeuganhängers montierte Kupplungsteil mit dem Königszapfen im Heckbereich des Nutzfahrzeuganhängers montiert ist. Beim Rückwärtsanfahren des Gebäudes sorgen die beiden Kupplungsteile der Sattelaufliegerkupplung dafür, dass das Heck des Nutzfahrzeuganhängers in Höhen- und Seitenrichtung ausgerichtet wird. Der Teller des gebäudeseitigen Teils der Sattelaufliegerkupplung weist hierzu einen in Fahrtrichtung liegenden, etwa V-förmigen Schlitz auf, der sich dann zur Mitte des Tellers verengt. Zusätzlich ist der Teller mit einer dem Nutzfahrzeuganhänger zugewandten und zum Gebäude hin ansteigenden Anlaufschräge versehen. Beim Auffahren des Nutzfahrzeuganhängers auf den Teller des gebäudeseitigen Kupplungsteils wird somit das Heck des Nutzfahrzeuganhängers über die Anlaufschräge des Tellers in vertikaler Richtung positioniert, speziell angehoben, und gleichzeitig wird das Heck über den V-förmigen Schlitz, in dem der Königszapfen des fahrzeugseitigen Kupplungsteils einläuft, gleichzeitig in horizontaler Richtung positioniert. Sobald der Königszapfen seine Endlage in dem V-förmigen Schlitz des gebäudeseitigen Kupplungsteils erreicht hat, kann dieser blockiert werden. Die Sattelaufliegerkupplung erfüllt somit die Doppelfunktion des Blockierens und des Ausrichtens des Nutzfahrzeuganhängers in vertikaler und horizontaler Richtung.

Es ist Aufgabe der Erfindung, eine zuverlässige und dabei einfach aufgebaute Blockiervorrichtung für ein Nutzfahrzeug bereitzustellen.

Erfindungsgemäß ist hierzu eine Blockiervorrichtung für ein Nutzfahrzeug, insbesondere ein Nutzfahrzeugauflieger, zum Blockieren des Nutzfahrzeugs wenigstens während eines Be- oder Entladevorgangs wenigstens in und entgegen einer Wegfahrrichtung vorgesehen, mit wenigstens einer Kupplung mit einem fahrbahn- oder gebäudeseitigen Kupplungsteil und einem fahrzeugseitigen Kupplungsteil, bei der die wenigstens eine Kupplung mittels einer konventionellen Nutzfahrzeuganhängerkupplung mit einer maulartigen Öffnung zum Einführen einer Kupplungsöse realisiert ist, wobei in einem verengten Abschnitt der maulartigen Öffnung ein bewegbarer Bolzen angeordnet ist, der aus der maulartigen Öffnung heraus und in diese hinein verschoben werden kann und im eingekuppelten Zustand eine Durchgangsöffnung in der Kupplungsdüse durchsetzt, wobei eine Einrichtung zum Ausrichten des Nutzfahrzeugs senkrecht zur Wegfahrrichtung in Hochrichtung und Querrichtung vorgesehen ist und wobei die Einrichtung wenigstens eine Auffahrrampe mit seitlichen Führungen und wenigstens einen hinteren, eine Bewegung entgegen der Wegfahrrichtung blockierenden Anschlag aufweist.

Überraschenderweise hat sich gezeigt, dass konventionelle Anhängerkupplungen von Nutzfahrzeugen auch für das Festhalten eines Nutzfahrzeugs, insbesondere eines Nutzfahrzeuganhängers, Trailers oder Aufbaus, beim Be- und Entladen gut geeignet sind. Konventionelle Nutzfahrzeuganhängerkupplungen sind zum einen stabil genug, um auch bei versehentlichem Wegfahrversuch des Nutzfahrzeugs vor einer entsprechenden Freigabe dieses sicher an einer Laderampe zu halten. Die maulartige Öffnung zum Einführen einer starren Kupplungsöse erleichtert das Ankuppeln des Nutzfahrzeugs an eine Tragstruktur einer Blockiervorrichtung oder ein Gebäudeteil. Schließlich sind konventionelle Nutzfahrzeuganhängerkupplungen in verschiedenen Ausführungen erhältlich und stabil und zuverlässig aufgebaut. Überraschenderweise lässt sich daher durch die Verwendung einer konventionellen Nutzfahrzeuganhängerkupplung für die erfindungsgemäße Blockiervorrichtung ein konstruktiv einfacher, zuverlässiger und kostengünstiger Aufbau realisieren, auch wenn bestimmte Funktionen der Nutzfahrzeuganhängerkupplung, so beispielsweise der abdeckbare Zugwinkelbereich, nicht benötigt werden. Eingesetzt werden können beispielsweise Bolzen- oder Hakenkupplungen.

Erfindungsgemäß ist eine Einrichtung zum Ausrichten des Nutzfahrzeugs senkrecht zur Wegfahrrichtung in Hochrichtung und Querrichtung vorgesehen.

Auf diese Weise kann das Nutzfahrzeug nicht nur blockiert werden, sondern es kann gleichzeitig in allen drei Achsenrichtungen zur Laderampe ausgerichtet werden. Dies erleichtert auch das Ausrichten der Kupplungsteile vor dem Blockieren des Nutzfahrzeugs. Eine solche Einrichtung zum Ausrichten des Nutzfahrzeugs kann beispielsweise in Führungsschienen bestehen, auf denen Gleitschuhe des Nutzfahrzeugs geführt sind.

Erfindungsgemäß ist die Einrichtung zum Ausrichten des Nutzfahrzeugs als Auffahrrampe mit seitlichen Führungen und wenigstens einem hinteren, eine Bewegung entgegen der Wegfahrrichtung blockierenden Anschlag ausgebildet.

Auf diese Weise kann das Nutzfahrzeug entgegen der Wegfahrrichtung exakt ausgerichtet werden, so dass einerseits das Einkuppeln der Kupplung problemlos möglich ist und andererseits die Kupplung nicht zusätzlich für eine Blockierung des Nutzfahrzeugs entgegen der Wegfahrrichtung übernehmen muss. Für das Ausrichten des Nutzfahrzeugs mittels der Auffahrrampe kann beispielsweise gleichzeitig eine Luftfederung entlastet werden, um auch ein seitliches Verschieben der Räder zu ermöglichen.

In Weiterbildung der Erfindung weist der fahrbahn- oder gebäudeseitige Kupplungsteil die maulartige Öffnung sowie einen bewegbaren Bolzen oder einen Haken und der fahrzeugseitige Kupplungsteil eine Kupplungsöse auf.

Auf diese Weise muss das Nutzfahrzeug, insbesondere ein Nutzfahrzeuganhänger, lediglich mit einer Kupplungsöse versehen werden. Das durch die erfindungsgemäße Blockiervorrichtung verursachte Mehrgewicht an einem Nutzfahrzeug kann dadurch in engen Grenzen gehalten werden. Der deutlich schwerere Teil der Nutzfahrzeuganhängerkupplung wird dagegen fahrbahnseitig oder gebäudeseitig befestigt, so dass das Gewicht der Kupplung hier keine Rolle spielt. Da darüber hinaus an einer Laderampe zahlreiche verschiedene Nutzfahrzeuge be- und entladen werden, ist weiterhin vorteilhaft, dass der mechanisch aufwändige und somit teure Teil der Nutzfahrzeuganhängerkupplung lediglich ein Mal benötigt wird, die unterschiedlichen zu blockierenden Nutzfahrzeuge müssen jeweils lediglich mit einer insbesondere starr befestigten Kupplungsöse versehen werden. Fahrbahn- oder gebäudeseitig ist somit ein Kupplungsteil mit einer maulartigen Öffnung sowie einem bewegbaren Bolzen oder ein Kupplungsteil mit einer ebenfalls maulartigen Öffnung und einem starren Haken, der mittels eines beweglichen Teils verschließbar ist, montiert. Die Einbaulage der wenigstens einen Kupplung ist dabei beliebig und muss lediglich auf die Einbaulage der Kupplungsösen am Nutzfahrzeug und die räumlichen Gegebenheiten abgestimmt sein.

In Weiterbildung der Erfindung ist der Bolzen pneumatisch, hydraulisch und/oder elektrisch verfahrbar, wobei ein den Bolzen betätigender Aktor von einer Fahrbahn aus gesehen unterhalb der maulartigen Öffnung angeordnet ist.

Auf diese Weise wird das automatische Blockieren und Freigeben eines zu beladenden oder entladenden Nutzfahrzeugs möglich. Beispielsweise wird nach vollständigem Abschluss eines Be- oder Entladevorgangs durch einen Bediener oder automatisch ein Freigabesignal erteilt, das dann den Bolzen der Kupplung aus der maulartigen Öffnung herausbewegt und die Kupplungsöse des Nutzfahrzeugs frei gibt. Auf diese Weise kann verhindert werden, dass Führer von Nutzfahrzeugen noch vor einem endgültig abgeschlossenen Ladevorgang versuchen, die Laderampe zu verlassen. Bisher werden hierzu Ampeln, Keile und dergleichen verwendet, denen jedoch allen gemeinsam ist, dass sie bei bewusster oder unbewusster Missachtung einer noch nicht erfolgten Freigabe durch einen Führer eines Nutzfahrzeugs nicht zuverlässig in der Lage sind, ein Nutzfahrzeug an der Laderampe zu halten. Indem ein den Bolzen betätigender Aktor von einer Fahrbahn aus gesehen unterhalb der maulartigen Vorrichtung angeordnet ist, können auch voluminöse Aktoren problemlos untergebracht werden. Oberhalb der maulartigen Vorrichtung steht in der Regel nur sehr wenig Platz zur Verfügung, da dort ja die Laderampe des Nutzfahrzeugs möglichst nahe an die Gebäudeladerampe herangefahren werden muss. Falls die Platzverhältnisse und der Aufbau der Kupplung es erlauben, kann der Aktor auch oberhalb, neben oder hinter der maulartigen Öffnung angeordnet sein.

In Weiterbildung der Erfindung weist die Einrichtung wenigstens eine Auffahrrampe auf und die wenigstens eine Kupplung ist an einem Querträger angeordnet, wobei der Querträger und die wenigstens eine Auffahrrampe Teil eines mit einer Fahrbahn verbindbaren Auffahrbocks bilden.

Durch eine solche Ausbildung können sämtliche für die Ausrichtung und Blockierung des Nutzfahrzeugs erforderlichen Komponenten an einem Auffahrbock angeordnet werden, der dann beispielsweise in geringem Abstand vor dem Gebäude oder auch am Gebäude angeordnet werden kann. Ein wesentlicher Vorteil hierbei ist, dass am Gebäude selbst keinerlei Veränderungen erforderlich sind und somit beispielsweise zur Anbringung der Kupplung keine Verstärkungen des Gebäudes erforderlich sind.

In Weiterbildung der Erfindung sind zwei Kupplungen vorgesehen, die senkrecht zur Wegfahrrichtung und parallel zu einer Fahrbahn voneinander beabstandet sind.

Auf diese Weise kann neben einer Blockierung in Wegfahrrichtung auch eine exakte Ausrichtung des Nutzfahrzeugs zur Laderampe sichergestellt werden.

In Weiterbildung der Erfindung weist die wenigstens eine Kupplung einen Sensor zum Erkennen eines Verriegelungszustands der Kupplung und/oder einen Sensor zum Erkennen eines Belegungszustands der Kupplung auf.

Auf diese Weise kann mittels der Kupplung selbst erkannt werden, ob sich überhaupt eine Kupplungsöse in der maulartigen Einführöffnung befindet und ob sich die Kupplung im verriegelten oder freigegebenen Zustand befindet. Auf diese Weise sind keine separaten Sensoren zum Erkennen einer Position des Nutzfahrzeugs erforderlich, da davon ausgegangen werden kann, dass dann, wenn sich die Kupplungsöse des Nutzfahrzeugs in der maulartigen Einführöffnung befindet, das Nutzfahrzeug korrekt zur Laderampe ausgerichtet ist. Eine weitere Verbesserung kann hier erreicht werden, wenn zwei Kupplungen eingesetzt werden, die senkrecht zur Wegfahrrichtung und parallel zur Fahrbahn voneinander beabstandet sind. Die Anordnung der Sensorik in der Kupplung selbst erlaubt deren geschützte Unterbringung, was insbesondere im rauen Verladebetrieb von erheblichen Vorteil ist.

Weitere Merkmale und Vorteile der Erfindung ergeben sich aus der folgenden Beschreibung bevorzugter Ausführungsformen im Zusammenhang mit den Zeichnungen. In den Zeichnungen zeigen:
- Fig. 1: eine schematische, perspektivische Ansicht einer erfindungsgemäßen Blockiervorrichtung gemäß einer ersten Ausführungsform von schräg unten,
- Fig. 2: eine schematische, perspektivische Ansicht einer erfindungsgemäßen Blockiervorrichtung gemäß einer zweiten Ausführungsform von schräg oben,
- Fig. 3: eine schematische Seitenansicht einer dritten bevorzugten Ausführungsform der erfindungsgemäßen Blockiervorrichtung,
- Fig. 4: eine schematische, perspektivische Ansicht eines Auffahrbocks gemäß einer vierten bevorzugten Ausführungsform der Erfindung und
- Fig. 5: eine schematische, perspektivische Ansicht eines Auffahrbocks gemäß einer fünften bevorzugten Ausführungsform der Erfindung.

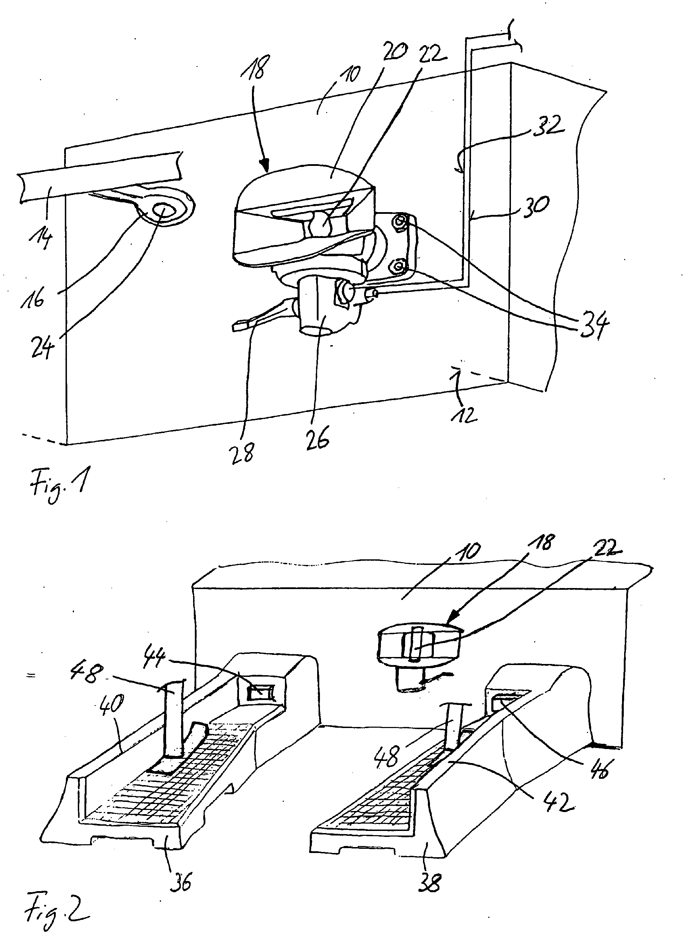

Die schematische perspektivische Darstellung der Fig. 1 zeigt eine Laderampe 10, die beispielsweise Teil eines Gebäudes ist. Vor der Laderampe 10 erstreckt sich eine in Fig. 1 lediglich gestrichelt angedeutete Fahrbahn 12, auf der Nutzfahrzeuge für das Be- und Entladen rückwärts an die Laderampe 10 herangefahren werden. Abschnittsweise dargestellt ist in Fig. 1 ein hinterer Querträger 14 und eine starre Kupplungsöse 16 eines Nutzfahrzeugaufliegers. Es ist dabei festzuhalten, dass sich die starre Kupplungsöse 16 am hinteren Ende des Nutzfahrzeugaufliegers befindet, an seiner Vorderseite kann ebenfalls eine Kupplungsöse angeordnet sein, die dann mit einem Zugfahrzeug verbunden wird. Die Kupplungsöse 16 wird als starr bezeichnet, da diese selbst keinerlei bewegliche Teile aufweist. Die Kupplungsöse 16 kann aber in nicht dargestellter Weise beweglich am Querträger 14 angeordnet sein, beispielsweise um Toleranzen bei der Positionierung des Nutzfahrzeugaufliegers auszugleichen. Die Kupplungsöse 16 kann in allen drei Achsenrichtungen um wenigstens einen gewissen Betrag relativ zum Träger 14 auslenkbar und/oder verschwenkbar sein.

Die erfindungsgemäße Blockiervorrichtung weist eine Kupplung mit einem fahrzeugseitigen und einem gebäudeseitigen Kupplungsteil auf, wobei die bereits erläuterte Kupplungsöse 16 am Nutzfahrzeugauflieger das fahrzeugseitige Kupplungsteil darstellt. Gebäudeseitig ist an der Laderampe 10 ein Teil 18 einer konventionellen Nutzfahrzeuganhängerkupplung fest montiert. Die Nutzfahrzeuganhängerkupplung weist eine maulartig gestaltete Einführöffnung 20 auf, in die die Kupplungsöse 16 eingeführt werden kann. Im verengten Abschnitt der maulartigen Einführöffnung 20 ist ein bewegbarer Bolzen 22 angeordnet, der aus der maulartigen Einführöffnung 20 heraus und in diese hinein verschoben werden kann. Im eingekuppelten Zustand durchsetzt der Bolzen 22 eine Durchgangsöffnung 24 in der Kupplungsöse 16 und blockiert dadurch den Nutzfahrzeugauflieger relativ zur Laderampe 10. Der Bolzen 22 kann mittels eines pneumatischen Aktors 26 oder manuell mittels eines Hebels 28 in die maulartigen Einführöffnung 20 hinein und aus dieser heraus bewegt werden. Der pneumatische Aktor 26 ist elektrisch ansteuerbar. Lediglich schematisch ist eine elektrische Signalleitung 30 und eine pneumatische Versorgungsleitung 32 in Fig. 1 angedeutet. Der Bolzen 22 ist darüber hinaus mittels einer Feder in die in Fig. 1 dargestellte Lage vorgespannt. Die Ruheposition des Bolzens 22 ist somit die in Fig. 1 dargestellte Lage. Auch bei Auswahl des pneumatischen Aktors 26 ist somit nicht zu befürchten, dass die Kupplungsöse 16 und somit der Nutzfahrzeugauflieger freigegeben werden. Vielmehr muss hierzu der Bolzen 22 mittels des Hebels 28 oder des pneumatischen Aktors 26 nach unten gezogen werden.

In Fig. 1 ist der äußerst einfache und dabei stabile Aufbau der erfindungsgemäßen Blockiervorrichtung zu erkennen. Das maulartige Kupplungsteil 18 wird mittels Befestigungsbolzen 34 beispielsweise unmittelbar an der Laderampe 10 oder einem zusätzlichen Träger in stabiler Weise verankert. Mittels des gebäudeseitigen Kupplungsteils 18 und der Kupplungsöse 16 wird ein Nutzfahrzeug während des Be- und Entladens dann zuverlässig an der Laderampe 10 gehalten. Sollte der Führer des Nutzfahrzeugs unter Missachtung eventueller Stoppsignale dennoch versuchen, den Nutzfahrzeugauflieger von der Laderampe 10 zu entfernen, so ist dies schlichtweg nicht möglich, da die Kupplungsöse 16 mittels des Bolzens 22 festgehalten ist. Im Unterschied zu konventionellen, auf die Räder wirkenden Blockiervorrichtungen mit Keilen oder zu Schranken ist somit ein versehentliches Entfernen des Nutzfahrzeugaufliegers von der Laderampe 10 nicht möglich.

Wie bereits ausgeführt, zeigt die Fig. 1 eine schematische Ansicht von schräg unten, wobei der Betrachter an und für sich unterhalb der in Fig. 1 lediglich gestrichelt angedeuteten Fahrbahn 12 angeordnet ist. Aus dieser Ansicht ist zu erkennen, dass der pneumatische Aktor 26 für die Betätigung des Bolzens 22 unterhalb der maulartigen Einführöffnung 20 angeordnet ist. Gegenüber der Einbaulage in einem Nutzfahrzeug ist die Einbaulage bei der erfindungsgemäßen Blockiervorrichtung daher um 180° gedreht. Dadurch steht für den pneumatischen Aktor 26 und den Hebel 28 genügend Raum zur Verfügung. Oberhalb der maulartigen Einführöffnung 20 muss die Ladefläche des Nutzfahrzeugs möglichst nahe an der Laderampe 10 angeordnet werden, so dass dort in den meisten Fällen nicht genügend Raum für die Anordnung des pneumatischen Aktors 26 und des Hebels 28 zur Verfügung steht.

Die schematische perspektivische Ansicht der Fig. 2 zeigt eine erfindungsgemäße Blockiervorrichtung gemäß einer weiteren bevorzugten Ausführungsform. Analog zur Ausführungsform der Fig. 1 ist an einer Laderampe 10 das gebäudeseitige Kupplungsteil 18 angeordnet. Um ein Nutzfahrzeug und speziell einen Nutzfahrzeuganhänger relativ zur Laderampe 10 und zum gebäudeseitigen Kupplungsteil 18 auszurichten, sind zwei Führungsschienen 36, 38 vorgesehen, auf denen Gleitschuhe eines Nutzfahrzeuganhängers gleiten können. Solche Gleitschuhe sind in dem deutschen Gebrauchsmuster DE 202 20 749.8 beschrieben und beispielsweise in den dortigen Fig. 12 und 13 dargestellt.

Während des Auffahrens solcher Gleitschuhe auf die Führungsschienen 36, 38 werden diese durch seitliche Führungsleisten 40, 42 geführt und dadurch in Querrichtung ausgerichtet. Die Führungsschienen 36 sind, wie in Fig. 2 dargestellt, ansteigend ausgebildet, wodurch eine Ausrichtung des Nutzfahrzeuganhängers in Hochrichtung erfolgt. An dem, der Laderampe 10 benachbarten Ende der Führungsschienen 36, 38 ist jeweils ein Anschlagpuffer 44, 46 vorgesehen, mit dem ein Anprallen der Gleitschuhe abgemildert wird und durch die das Nutzfahrzeug in Wegfahrrichtung ausgerichtet wird. Beim Auffahren des Nutzfahrzeugs auf die Führungsschienen 36, 38 wird somit zwangsläufig auch eine Kupplungsöse am Nutzfahrzeug so ausgerichtet, dass sie in die maulartige Einführöffnung des gebäudeseitigen Kupplungsteils 18 einfahren kann. Nach dem Anschlagen der Gleitschuhe an den Anschlägen 44, 46 kann dann der Bolzen 22 in die maulartigen Einführöffnung hinein und durch die Kupplungsöse hindurch verfahren werden und blockiert dadurch das Nutzfahrzeug relativ zur Laderampe 10. Die Gleitschuhe 48 sind in Fig. 2 lediglich schematisch angedeutet.

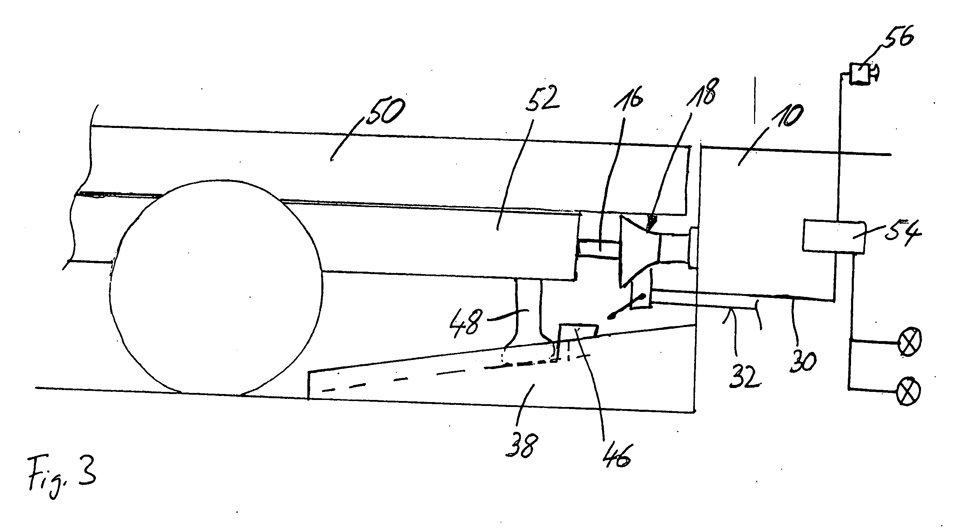

Die schematisch Seitenansicht der Fig. 3 zeigt eine schematisch Seitenansicht der Blockiervorrichtung der Fig. 2, wobei in dem in Fig. 3 dargestellten Zustand ein Nutzfahrzeuganhänger 50 sich in seiner Endposition befindet, in der das hintere Ende seiner Ladefläche nur geringfügig beabstandet von der Laderampe 10 angeordnet ist. In dieser Position wird der Nutzfahrzeuganhänger 50 dadurch zuverlässig gehalten, dass, wie bereits erläutert wurde, die Kupplungsöse 16, die an dem in Fig. 3 nicht erkennbaren Querträger 14 befestigt ist, der wiederum mit den Längsträgern 52 des Anhängers 50 verbunden ist, sicher in dem gebäudeseitigen Kupplungsteil 18 gehalten ist.

In Fig. 3 schematisch dargestellt ist die Führungsschiene 38 der Fig. 2, auf der der Gleitschuh 48 angeordnet ist. In der in Fig. 3 dargestellten Position des Anhängers 50 hat der Gleitschuh 48 am Anschlag 46 der Führungsschienen 38 angeschlagen. Eine Positionierung des Nutzfahrzeuganhängers 50 erfolgt somit mittels der Führungsschienen 38 und dem Anschlag 46 sowie der in Fig. 3 nicht erkennbare Führungsschiene 36 mit dem Anschlag 44, wie bereits anhand der Fig. 2 erläutert wurde. Die Kupplung der erfindungsgemäßen Blockiervorrichtung mit der Kupplungsöse 16 und dem gebäudeseitigen Kupplungsteil 18 muss somit keine Positionier- oder Pufferungsfunktionen erfüllen, da die Kupplungsöse 16 am Anhänger 50 zusammen mit diesem ausgerichtet wird und dadurch zwangsläufig in die maulartige Einführöffnung des gebäudeseitigen Kupplungsteils 18 eingeführt wird. Wie bereits erläutert wurde, kann zum Ausgleich von Toleranzen die Kupplungsöse 16, die zwar selbst starr ausgebildet ist, ihrerseits beweglich am Anhänger 50 angeordnet sein. Dadurch ist der Ausgleich von Positionierungstoleranzen dadurch möglich, dass die Kupplungsöse 16 mittels der maulartigen Einführöffnung des Kupplungsteils 18 in die zum Einführen des Bolzens erforderliche Position innerhalb des Kupplungsteils 18 geführt wird.

In der Fig. 2 weiterhin angedeutet sind eine pneumatische Versorgungsleitung 32 und eine elektrische Signalleitung 30, die von dem pneumatischen Aktor des Kupplungsteils 18 zu einer Steuereinheit 54 geführt ist. Die Steuereinheit 54 erhält Signale von einem Schalter 56, mit dem ein Bediener beispielsweise die Beendigung oder den Beginn eines Ladevorgangs signalisieren kann. Entsprechend gibt die Steuereinheit 54 ein Signal an den Kupplungsteil 18 aus, um die Kupplungsöse 16 zu blockieren oder freizugeben. In Abhängigkeit des Blockierzustandes der Kupplung 18 kann die Steuereinheit 54 auch eine Lichtampel 58 ansteuern. Das Schaltsignal des Schalters 56 kann auch automatisch gegeben werden, falls eine automatische Be- und Entladevorrichtung im Bereich der Laderampe 10 vorgesehen ist.

Die verwendete Kupplung 18 ist weiterhin auch mit nicht dargestellter Sensorik ausgerüstet, die es ermöglicht, dass in der Kupplung selbst erfasst wird, ob diese ordnungsgemäß verriegelt ist oder sich in der Freigabestellung befindet und darüber hinaus gleichzeitig feststellt, ob sich eine Kupplungsöse in der maulartigen Öffnung befindet oder diese leer ist. Die Signale der entsprechenden Sensoren werden ebenfalls an die Steuereinheit 54 weitergegeben und können dort weiter verarbeitet werden. Speziell ist es möglich, dass die Kupplung 18 eine eingeführte Öse selbsttätig verriegelt.

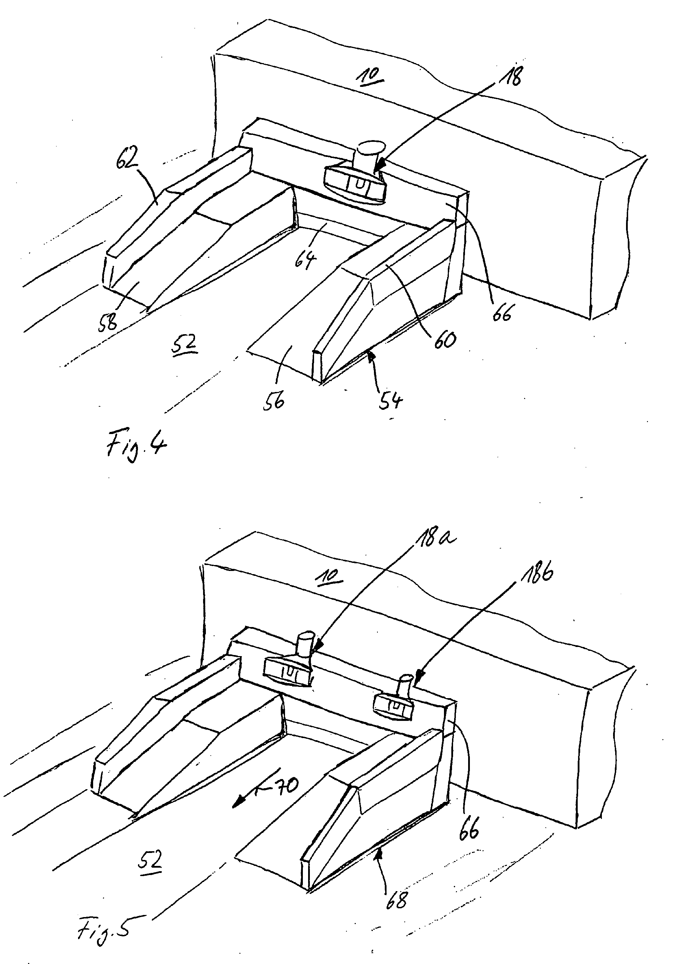

Die schematische perspektivische Ansicht der Fig. 4 zeigt eine weitere Ausführungsform der Erfindung. Vor einer Laderampe 10 eines Gebäudes ist auf einer Fahrbahn 52 ein Auffahrbock 54 angeordnet, mittels dem die erfindungsgemäße Blockiervorrichtung realisiert ist. Der Auffahrbock 54 weist eine rechte Auffahrrampe 56 und eine linke Auffahrrampe 58 auf, die jeweils seitlich von Führungsschienen 60, 62 begrenzt sind. Auffahrrampen 56, 58 und Führungsschienen 60, 62 dienen, wie zuvor bereits beschrieben wurde, zur Ausrichtung eines Nutzfahrzeugaufliegers beim Anfahren in Richtung auf die Laderampe 10. Die Auffahrrampen 56, 58 sind mittels zweier Querträger 64, 66 verbunden, wobei an dem oberen Querträger 66 mittig der fahrbahnseitige Kupplungsteil 18 mit der maulartigen Einfuhröffnung angeordnet ist. Der Querträger 66 bildet gleichzeitig einen Anschlag, um eine Bewegung des Nutzfahrzeugs in Richtung auf die Laderampe 10 zu abzustoppen. Der Auffahrbock 54 ist in einem geringen Abstand vor der Laderampe 10 auf der Fahrbahn 52 angeordnet. Da die Positionierung und Blockierung des Nutzfahrzeugs somit ausschließlich durch den Auffahrbock 54 erfolgt, sind am Gebäude selbst keinerlei An- oder Einbauten zwingend erforderlich. Es genügt, den Auffahrbock 54 vor der Laderampe 10 anzuordnen, um sowohl eine Ausrichtung als auch eine Blockierung eines Nutzfahrzeugs für einen Be- oder Entladevorgang zu ermöglichen.

Die schematische, perspektivische Ansicht der Fig. 5 zeigt einen weiteren Auffahrbock 68, mittels dem die erfindungsgemäße Blockiervorrichtung realisiert ist. Der Auffahrbock 68 ist im Wesentlichen gleich zum Auffahrbock 54 der Fig. 4 ausgebildet, weist im Unterschied hierzu aber zwei fahrbahnseitige Kupplungsteile 18a, 18b auf. Beide Kupplungsteile 18a, 18b sind an dem Querträger 66 des Auffahrbocks 68 befestigt. Die Kupplungsteile 18a, 18b sind dabei senkrecht zur Wegfahrrichtung, die mittels eines Pfeiles 70 angedeutet ist, und parallel zur Fahrbahnoberfläche 52 voneinander beabstandet. Das Vorsehen von zwei Kupplungsteilen 18a, 18b, die parallel zur Fahrbahn 52 und senkrecht zur Wegfahrrichtung 70 voneinander beabstandet sind, stellt sicher, dass ein Nutzfahrzeugauflieger immer exakt senkrecht zur Laderampe 10 ausgerichtet ist, da bei nicht exakt senkrechter Ausrichtung wenigstens eine seiner beiden Kupplungsösen nicht vollständig in das jeweils zugeordnete Kupplungsteil 18a, 18b eingreifen würde und dies entsprechend von der Sensorik im jeweiligen Kupplungsteil 18a, 18b erkannt würde.

In den Darstellungen der Fig. 4 und Fig. 5 sind die den fahrbahnseitigen Kupplungsteilen 18, 18a, 18b zugeordneten Aktoren jeweils oberhalb der maulartigen Einführöffnung angeordnet. Eine solche Anordnung kann gewählt werden, wenn oberhalb der maulartigen Einführöffnung genügend Platz für die Anordnung der Aktoren zur Verfügung steht. Es ist aber auch möglich, die maulartige Einführöffnung in einer gegenüber den Fig. 4 und 5 um 90° gedrehten Position anzuordnen. Entsprechend müssten lediglich die am Nutzfahrzeugauflieger angeordneten Kupplungsösen ebenfalls um 90° gedreht werden.

## Patentansprüche

1. Blockiervorrichtung für ein Nutzfahrzeug, insbesondere einen Nutzfahrzeuganhänger, zum Blockieren des Nutzfahrzeugs wenigstens während eines Be- oder Entladevorgangs wenigstens in und entgegen einer Wegfahrrichtung, mit wenigstens einer Kupplung mit einem fahrbahn- oder gebäudeseitigen Kupplungsteil und einem fahrzeugseitigen Kupplungsteil, **dadurch gekennzeichnet, dass** die wenigstens eine Kupplung mittels einer konventionellen Nutzfahrzeuganhängerkupplung mit einer maulartigen Öffnung (20) zum Einführen einer Kupplungsöse (16) realisiert ist, wobei in einem verengten Abschnitt der maulartigen Öffnung (20) ein bewegbarer Bolzen (22) angeordnet ist, der aus der maulartigen Öffnung (20) heraus und in diese hinein verschoben werden kann und im eingekuppelten Zustand eine Durchgangsöffnung (24) in der Kupplungsöse (16) durchsetzt, dass eine Einrichtung zum Ausrichten des Nutzfahrzeugs (50) senkrecht zur Wegfahrrichtung in Hochrichtung und Querrichtung vorgesehen ist und dass die Einrichtung wenigstens eine Auffahrrampe (36, 38; 56, 58) mit seitlichen Führungen (40, 42; 60, 62) und wenigstens einem hinteren, eine Bewegung entgegen der Wegfahrrichtung blockierenden Anschlag (44, 46) aufweist.

2. Blockiervorrichtung nach Anspruch 1, **dadurch gekennzeichnet, dass** der fahrbahn- oder gebäudeseitige Kupplungsteil (18) die maulartige Öffnung (20) sowie einen bewegbaren Bolzen (22) oder einen Haken und der fahrzeugseitige Kupplungsteil eine Kupplungsöse (16) aufweist.

3. Blockiervorrichtung nach Anspruch 2, **dadurch gekennzeichnet, dass** der Bolzen (22) pneumatisch, hydraulisch und/oder elektrisch verfahrbar ist, wobei ein den Bolzen (22) betätigender Aktor (26) von einer Fahrbahn (12) aus gesehen unterhalb der maulartigen Öffnung (20) angeordnet ist

4. Blockiervorrichtung nach einem der vorstehenden Ansprüche, **dadurch gekennzeichnet, dass** die wenigstens eine Kupplung an einem Querträger (66) angeordnet ist, wobei der Querträger (66) und die wenigstens eine Auffahrrampe (56, 58) Teil eines mit einer Fahrbahn (52) verbindbaren Auffahrbocks (54; 68) bilden.

5. Blockiervorrichtung nach wenigstens einem der vorstehenden Ansprüche, **dadurch gekennzeichnet, dass** zwei Kupplungen vorgesehen sind, die senkrecht zur Wegfahrrichtung (70) und parallel zu einer Fahrbahn (52) voneinander beabstandet sind.

6. Blockiervorrichtung nach wenigstens einem der vorstehenden Ansprüche, **dadurch gekennzeichnet, dass** die wenigstens eine Kupplung einen Sensor zum Erkennen eines Verriegelungszustands der Kupplung und/oder einen Sensor zum Erkennen eines Belegungszustands der Kupplung aufweist.

## Claims

1. Blocking device for a utility vehicle, in particular for a utility vehicle trailer, to block the utility vehicle at least during a loading or offloading operation at least in and against a drive-off direction, having at least one coupling with a coupling part on the ground side or building side and one coupling on the vehicle side, **characterized in that** the at least one coupling is achieved by means of a conventional utility vehicle trailer coupling with a jaw-like opening (20) for insertion of a coupling eye (16), where in a narrowed section of the jaw-like opening (20) a movable pin (22) is arranged which can be slid in and out of said jaw-like opening (20) and passes in the engaged state through an opening (24) in the coupling eye (16), **in that** a device for alignment of the utility vehicle (50) is provided perpendicular to the drive-off direction in the vertical direction and the transverse direction, and **in that** the device has at least one access ramp (36, 38; 56, 58) with lateral guides (40, 42; 60, 62) and with at least one rear stop (44, 46) to block any movement against the drive-off direction.

2. Blocking device according to Claim 1, **characterized in that** the coupling part (18) on the ground side or building side has the jaw-like opening (20) and a movable pin (22) or a hook, and the coupling part on the vehicle side has a coupling eye (16).

3. Blocking device according to Claim 2, **characterized in that** the pin (22) is movable pneumatically, hydraulically and/or electrically, where an actuator (26) operating the pin (22) is arranged underneath the jaw-like opening (20) when seen from the ground (12).

4. Blocking device according to one of the preceding claims, **characterized in that** the at least one coupling is arranged on a cross member (66), said cross member (66) and the at least one access ramp (56, 58) forming part of an access block (54; 68) connectable to the ground (52).

5. Blocking device according to at least one of the preceding claims, **characterized in that** two couplings are provided which are at a distance from one another perpendicular to the drive-off direction (70) and parallel to the ground (52).

6. Blocking device according to at least one of the preceding claims, **characterized in that** the at least one coupling has a sensor for detecting a locked state of the coupling and/or a sensor for detecting an occupied state of the coupling.

## Revendications

1. Dispositif de blocage pour un véhicule utilitaire, en particulier une remorque de véhicule utilitaire, destiné à bloquer le véhicule utilitaire au moins pendant le chargement ou déchargement, au moins dans un sens de circulation et dans le sens opposé, avec au moins un accouplement à un élément d'accouplement situé du côté bâtiment ou du sol et un élément d'accouplement situé sur le véhicule, **caractérisé en ce que** l'au moins un accouplement est réalisé au moyen d'un dispositif conventionnel d'attelage de remorque de véhicule utilitaire avec une ouverture (20) de type mâchoire pour l'introduction d'un anneau d'accouplement (16), sachant qu'est disposé dans une section rétrécie de l'ouverture de type mâchoire (20) un boulon mobile (22) qui peut être déplacé vers l'extérieur de l'ouverture de type mâchoire (22) ou vers l'intérieur de celle-ci et qui, à l'état accouplé, traverse une ouverture de passage (24) dans l'anneau d'accouplement (16), qu'est prévu un dispositif pour orienter le véhicule utilitaire (50) perpendiculairement au sens de circulation dans le sens vertical et transversal, et que le dispositif présente au moins une rampe d'accès (36, 38 ; 56, 58) avec des guides latéraux (40, 42 ; 60, 62) et au moins une butée arrière (44, 46) limitant un mouvement dans le sens inverse au sens de circulation.

2. Dispositif de blocage selon la revendication 1, **caractérisé en ce que** l'élément d'accouplement situé du côté bâtiment ou du sol (18) présente l'ouverture de type mâchoire (20) ainsi qu'un boulon mobile (22) ou un crochet, et que l'élément d'accouplement côté véhicule présente un anneau d'accouplement (16).

3. Dispositif de blocage selon la revendication 2, **caractérisé en ce que** le boulon (22) peut être déplacé de manière pneumatique, hydraulique et/ou électrique, sachant qu'un actionneur (26) actionnant le boulon (22) est disposé, vu du sol (12), au-dessous de l'ouverture de type mâchoire (20).

4. Dispositif de blocage selon l'une des revendications précédentes, **caractérisé en ce que** l'au moins un accouplement est disposé sur une traverse (66), sachant que la traverse (66) et l'au moins une rampe d'accès (56, 58) forment une partie d'un dispositif d'accès (54 ; 68) pouvant être relié au sol (52).

5. Dispositif de blocage selon au moins l'une des revendications précédentes, **caractérisé en ce que** sont prévus deux accouplements disposés à distance l'un de l'autre perpendiculairement au sens de circulation (70) et parallèlement au sol (52).

6. Dispositif de blocage selon au moins l'une des revendications précédentes, **caractérisé en ce que** l'au moins un accouplement présente un capteur pour détecter un état de verrouillage de l'accouplement et/ou un capteur pour détecter un état d'occupation de l'accouplement.
